# EUROPÄISCHE PATENTSCHRIFT

(11) **EP 3 170 696 B1**
(45) Veröffentlichungstag und Bekanntmachung des Hinweises auf die Patenterteilung: **13.06.2018**
(21) Anmeldenummer: 16186422.8
(22) Anmeldetag: 30.08.2016
(51) Int. Cl.: B60P 1/64

(54) **BEHÄLTERAUFSTELLER-VORRICHTUNG, INSBESONDERE SILOAUFSTELLER-VORRICHTUNG, FÜR EIN NUTZFAHRZEUG SOWIE NUTZFAHRZEUG MIT DERARTIGER BEHÄLTERAUFSTELLER-VORRICHTUNG**
CONTAINER POSITIONER DEVICE, IN PARTICULAR SILO POSITIONER DEVICE, FOR A COMMERCIAL VEHICLE AND COMMERCIAL VEHICLE WITH SUCH A CONTAINER POSITIONER DEVICE
DISPOSITIF DE STABILISATEUR DE RECIPIENT, EN PARTICULIER DISPOSITIF DE STABILISATEUR DE SILO, POUR UN VEHICULE UTILITAIRE ET VEHICULE UTILITAIRE COMPRENANT UN TEL DISPOSITIF DE STABILISATEUR DE RECIPIENT

(30) Priorität: 17.11.2015 DE 202015106219 U
(43) Veröffentlichungstag der Anmeldung: 24.05.2017
(73) Patentinhaber: Bock Silosysteme GmbH, 28816 Stuhr (DE)
(72) Erfinder: BOCK, Tobias, 28816 Stuhr (DE); BOCK, Bernhard, 28816 Stuhr (DE)
(74) Vertreter: Wasiljeff, Johannes M.B.

(56) Entgegenhaltungen:
- DE-A1- 3 526 209
- GB-A- 1 347 418
- US-A- 2 741 383

## Beschreibung

Die Erfindung betrifft gemäß dem Oberbegriff von Anspruch 1 eine Behälteraufsteller-Vorrichtung, insbesondere Siloaufsteller-Vorrichtung, für ein Nutzfahrzeug mit einem Kipprahmen zum Aufnehmen und Handhaben eines Behälters, z.B. Silobehälters, Wechselbehälters, Tankbehälters oder Abrollbehälters, wobei der Kipprahmen mittels wenigstens eines Kipprahmen-Hydraulikzylinders um eine Schwenkachse schwenkbar ist. Ferner betrifft die Erfindung gemäß dem Oberbegriff von Anspruch 10 ein Nutzfahrzeug mit einer derartigen Siloaufsteller-Vorrichtung.
Herkömmlicherweise sind derartige Behälteraufsteller-Vorrichtungen an Nutzfahrzeugen vorgesehen, um Behälter, wie beispielsweise Silobehälter, zu transportieren und aufzustellen, siehe z.B. das Dokument DE 35 26 209 A1. Derartige bekannte Siloaufsteller weisen mehrere große und schwere Hydraulikzylinder auf. Neben zwei Hydraulikzylindern zum Schwenken des Kipprahmens, nachfolgend als Kipprahmen-Hydraulikzylinder bezeichnete Hydraulikzylinder, ist herkömmlicherweise ein weiterer mittig am Kipprahmen angeordneter leistungsstarker Hydraulikzylinder vorgesehen, mittels dem ein Zwischenrahmen in Längsrichtung des Kipprahmens verfahren werden kann. Mittels dieses mittig angeordneten Hydraulikzylinders kann nicht nur ein auf dem Boden stehender Silobehälter angehoben werden, sondern mittels dieses Hydraulikzylinders zudem vom Nutzfahrzeug auf einen Anhänger bzw. von diesem Anhänger auf das Nutzfahrzeug verschoben werden. Auf diese Weise können zwei Silobehälter von einem aus einem Zugfahrzeug und einem Anhänger bestehenden Fahrzeugzug transportiert werden, obgleich nur eine Siloaufsteller-Vorrichtung am Fahrzeug zur Verfügung steht.

Der mittig angeordnete Hydraulikzylinder muss zu diesem Zweck jedoch beispielsweise den auf dem Zugfahrzeug aufliegenden Silobehälter bis auf den Anhänger verschieben können. Aus diesem Grund ist es erforderlich, dass dieser Hydraulikzylinder eine erhebliche Baulänge aufweist. Dieses Erfordernis führt zu einem raumgreifenden und schweren Aufbau, welcher die Nutzlast des Nutzfahrzeuges reduziert. Entsprechendes gilt für die Handhabung anderer Behälter, wie z.B. Wechselbehälter.

Der Erfindung liegt daher die Aufgabe zu Grunde, die Nutzlast derartiger Nutzfahrzeuge zu erhöhen.

Die Erfindung löst diese Aufgabe mit einer Behälteraufsteller-Vorrichtung, insbesondere Siloaufsteller-Vorrichtung, mit den Merkmalen gemäß Anspruch 1 sowie mit einem Nutzfahrzeug mit den Merkmalen gemäß Anspruch 10.

Eine erfindungsgemäße Behälteraufsteller-Vorrichtung für ein Nutzfahrzeug sieht demnach neben dem eingangs genannten Kipprahmen zur Aufnahme und Handhabung eines Behälters, z.B. Silobehälters, Wechselbehälters, Tankbehälters oder Abrollbehälters, am heckseitigen Endabschnitt des Kipprahmens eine angetriebene Traktionsrolle vor, mittels der der Behälter in Längsrichtung des Kipprahmens verschiebbar ist.

Das erfindungsgemäße Nutzfahrzeug weist demnach eine erfindungsgemäße Behälteraufsteller-Vorrichtung, insbesondere Siloaufsteller-Vorrichtung, auf.

Mittels der Traktionsrolle kann der von dem Kipprahmen aufgenommene Behälter nach im Wesentlichen waagerechter Ausrichtung des Kipprahmens und somit auf der Seite liegender Ausrichtung des Behälters vom Zugfahrzeug auf den Anhänger befördert werden. Eine übliche Bauform eines Behälters weist zwei Längsstreben auf, welche sich im Wesentlichen über seine gesamte Länge erstrecken. Diese Längsstreben liegen auf der Traktionsrolle auf, wenn der Behälter sich auf dem Zugfahrzeug befindet. Wird die Traktionsrolle nun angetrieben - von der linken Seite des Fahrzeugs auf das Fahrzeug gesehen im Uhrzeigersinn -, so wird der Behälter nach hinten in Richtung eines Anhängers befördert. Idealerweise ist der Anhänger bei diesem Vorgang mit seinem Heck zum Heck des Zugfahrzeugs hin ausgerichtet. Somit muss nämlich der Behälter nicht über die Deichsel des Anhängers hinweg auf den Anhänger befördert werden.

Zum Abladen eines Fahrzeugzugs mit zwei Behältern - jeweils einem Behälter auf dem Anhänger und einem Behälter auf dem Zugfahrzeug - wird zunächst der Anhänger vom Zugfahrzeug getrennt und dann der Behälter des Zugfahrzeugs abgeladen und aufgestellt, indem der Kipprahmen in eine im Wesentlichen senkrechte Stellung verschwenkt wird. Ein Lösen des Kipprahmens vom Behälter erfolgt dann beispielsweise,
a) indem ein oberer verschiebbarer Teil des Kipprahmens nach unten verschoben wird oder
b) indem heckseitige, hydraulisch betätigbare Stützbeine am Fahrzeug abgesenkt werden oder
c) indem eine Hubachse des Fahrzeugs den Fahrzeugrahmen absenkt oder
d) indem der Kipprahmen über die senkrechte Stellung hinaus verschwenkt wird, so dass das obere Ende des Kipprahmens absinkt.
Es gibt somit verschiedene Möglichkeiten, wie nach dem Aufstellen eines Behälters der Behälter vom Kipprahmen gelöst werden kann.

Sodann fährt das Zugfahrzeug rückwärts an das heckseitige Ende des Anhängers heran und zwar mit teilweise verschwenktem Kipprahmen, so dass der hintere Teil des Kipprahmens unter den sich auf dem Anhänger befindenden Behälter untergreifen kann. Anschließend wird der Kipprahmen wieder in eine im Wesentlichen horizontale Lage verschwenkt, wobei das hintere Ende des Kipprahmens nun in Kontakt mit den Längsstreben des sich auf dem Anhänger befindenden Behälters befindet. Nun wird die Traktionsrolle in einer Richtung angetrieben, die bei Betrachtung des Zugfahrzeugs von dessen linker Seite gegen den Uhrzeigersinn gerichtet ist. Auf diese Weise wird der Behälter des Anhängers in Richtung des Fahrerhauses des Zugfahrzeugs befördert. Durch fortgesetztes Antreiben der Traktionsrolle gelangt der Behälter des Anhängers schließlich in die gleiche Position wie der zuvor abgeladene Silobehälter. Zum Aufstellen dieses Behälters wird nunmehr, wie vorstehend beschrieben, verfahren, d.h., der Kipprahmen wird wieder in eine aufrechte Position verschwenkt.

Die erfindungsgemäße Traktionsrolle erfordert nur einen kleinen Bauraum im Vergleich zu herkömmlichen Hydraulikzylindern zum Verschieben eines Behälters. Zudem spart diese Traktionsrolle Gewicht im Vergleich zu einem großen Hydraulikzylinder. Dieses eingesparte Gewicht kommt der Nutzlast des Fahrzeugs zugute. Darüber hinaus können beispielsweise Silobehälter weniger aufwändig ausgestaltet werden als herkömmliche Silobehälter, die eine am oberen Ende eines Silobehälters (im aufgestellten Zustand betrachtet) vorgesehene Aufnahmeeinrichtung für herkömmliche Siloaufsteller aufweisen. Derartige Aufnahmeeinrichtungen führen nämlich zu einer erheblichen Belastung des Silobehälters an dessen oberem Deckel, was eine Verstärkung des Silobehälters in diesem Bereich erforderlich macht. Diese Verstärkung erfordert jedoch zusätzliches Material, welches wiederum zu einer Gewichtserhöhung führt. Dank der erfindungsgemäßen Konstruktion ist eine derartige Verstärkung des Silobehälters in seinem oberen Bereich jedoch nicht mehr notwendig. Die somit vermiedene Gewichtserhöhung bei der Konstruktion des Silobehälters führt wiederum dazu, dass der Silobehälter mit einem höheren Gewicht des zu transportierenden bzw. im Silobehälter zu bevorratenden Materials beladen werden kann. Somit kann dank der Erfindung auch die Nutzlast des Silobehälters gesteigert werden. Insgesamt erlaubt die Erfindung somit eine Nutzlaststeigerung sowohl im Hinblick auf das Nutzfahrzeug als auch im Hinblick auf den Behälter.

Gemäß einer Weiterbildung der Erfindung ist die Traktionsrolle mittels eines Hydraulikmotors angetrieben. Diese Ausgestaltung hat den Vorteil eines leistungsstarken Antriebs bei gleichzeitig kleiner Bauweise. Zusätzlich oder alternativ zum Hydraulikmotor ist die Traktionsrolle mittels eines Elektromotors angetrieben.

Gemäß einer weiteren Weiterbildung der Erfindung weist die Behälteraufsteller-Vorrichtung eine Hakeneinrichtung auf, die am Kipprahmen angeordnet ist, insbesondere an einem Zwischenrahmen, der in Längsrichtung des Kipprahmens mittels wenigstens eines Zwischenrahmen-Hydraulikzylinders verfahrbar ist. Dank dieser Ausgestaltung kann der Behälter mittels des Zwischenrahmens angehoben werden, bevor er gekippt wird. Ein Anheben vor dem Kippen ist vorteilhaft, um etwaige Beschädigungen des Behälters zu vermeiden. Zwar kann grundsätzlich der Behälter auch aus dem Stand heraus gekippt werden. Dies führt jedoch zu einer erheblichen Belastung des Standfußes des Behälters und erfordert daher eine zusätzliche Versteifung des Standfußes. Eine derartige Versteifung ist jedoch entbehrlich oder kann weniger aufwändig ausgeführt werden, wenn der Behälter vor dem Kippen angehoben wird. Dies ist dank des verfahrbaren Zwischenrahmens mit Hakeneinrichtung möglich.

Eine Weiterbildung der Erfindung sieht vor, dass die Hakeneinrichtung einen Aufnahmehaken zum Aufnehmen des Behälters aufweist, wobei der Aufnahmehaken einen ausgefahrenen Zustand und einen eingefahrenen Zustand einnehmen kann. Im ausgefahrenen Zustand steht der Aufnahmehaken gegenüber dem Gehäuse der Hakeneinrichtung hervor, während der Aufnahmehaken im eingefahrenen Zustand nicht aus dem Gehäuse hervorsteht. Der Aufnahmehaken kann somit in seinem ausgefahrenen Zustand mit einem korrespondierenden Bolzen des Behälters in Eingriff gebracht werden, während er in seinem eingefahrenen Zustand eine ungehinderte Relativbewegung der Hakeneinrichtung gegenüber dem Bolzen zulässt. Der Behälter kann somit vom Zugfahrzeug auf den Anhänger befördert werden, ohne dass der Aufnahmehaken dieses Befördern behindert.

Gemäß einer Weiterbildung ist der Aufnahmehaken mittels eines Stellantriebs, beispielsweise eines Pneumatikzylinders oder Elektroantriebs, verschwenkbar und/oder versenkbar. Dieser Stellantrieb kann den Aufnahmehaken von seinem ausgefahrenen Zustand in seinen eingefahrenen Zustand verbringen und umgekehrt. Ein Pneumatikzylinder stellt eine einfache, zuverlässige, sichere und kostengünstige Konstruktion für die Verstellung des Aufnahmehakens bereit. Eine pneumatische Ausgestaltung dieses Zylinders ist darüber hinaus deshalb vorteilhaft, da Nutzfahrzeuge ohnehin regelmäßig mit pneumatischen Systemen, insbesondere pneumatischen Bremssystemen, ausgestattet sind und daher Druckluft ohnehin zur Verfügung steht. An die Druckluftaufbereitung derartiger vorhandener pneumatischer Systeme wird vorteilhaft dieser Pneumatikzylinder unter Zwischenschaltung entsprechender Ventileinrichtungen zur Steuerung des Pneumatikzylinders angeschlossen.

Gemäß einer Weiterbildung weist die Hakeneinrichtung eine Sicherungsfalle auf, die einen ausgefahrenen und einen eingefahrenen Zustand einnehmen kann, wobei im ausgefahrenen Zustand die Sicherungsfalle gegenüber dem Gehäuse der Hakeneinrichtung hervorsteht und im eingefahrenen Zustand die Sicherungsfalle nicht aus dem Gehäuse hervorsteht. Die Sicherungsfalle verhindert im ausgefahrenen Zustand, dass der Bolzen aus dem Aufnahmehaken heraustreten kann. Im eingefahrenen Zustand der Sicherungsfalle wird jedoch eine Relativbewegung der Hakeneinrichtung gegenüber dem Bolzen zumindest in einer Richtung zugelassen. Somit kann der Bolzen mit dem Aufnahmehaken in Eingriff gebracht werden und anschließend diese Verbindung zwischen Bolzen und Aufnahmehaken mittels der Sicherungsfalle gesichert werden. Die Sicherungsfalle verhindert dabei insbesondere ein Herausspringen des Behälters aus dem Kipprahmen während der Fahrt, insbesondere bei unebenen Bodenbeschaffenheiten, wie sie unter anderem regelmäßig auf Baustellen zu erwarten sind.

Gemäß einer Weiterbildung ist die Sicherungsfalle mittels eines weiteren Stellantriebs, insbesondere Pneumatikzylinders, verschwenkbar und/oder versenkbar. Mittels dieses weiteren Stellantriebs kann die Sicherungsfalle vom ausgefahrenen Zustand in den eingefahrenen Zustand wechseln und umgekehrt. Ein Pneumatikzylinder stellt ebenso wie der zuvor beschriebene Pneumatikzylinder für den Aufnahmehaken eine einfache, zuverlässige, sichere und kostengünstige Konstruktion für die Verstellung der Sicherungsfalle bereit. Auch hier ist die pneumatische Ausgestaltung dieses Pneumatikzylinders vorteilhaft, da das Nutzfahrzeug mit einem pneumatischen System, wie insbesondere einem pneumatischen Bremssystem, ausgestattet ist, an dessen Druckluftaufbereitung der Pneumatikzylinder unter Zwischenschaltung entsprechender Ventileinrichtungen zur Steuerung des Pneumatikzylinders angeschlossen ist.

Gemäß einer Weiterbildung fixiert der Aufnahmehaken, wenn er sich im eingefahrenen Zustand befindet, die Sicherungsfalle, wenn sich diese ebenfalls im eingefahrenen Zustand befindet. Durch diese Fixierung muss nur eines der beiden den Aufnahmehaken und die Sicherungsfalle umfassenden Organe gesichert werden, damit beide Organe in ihrem eingefahrenen Zustand verbleiben.

Gemäß einer weiteren Weiterbildung der Erfindung ist die Schwenkachse parallel, jedoch beabstandet von der Traktionsrolle angeordnet und zwar in Fahrtrichtung des Nutzfahrzeugs betrachtet vor der Traktionsrolle. Der Abstand zwischen Schwenkachse und Traktionsrolle ist dabei jedoch im Verhältnis zur Länge des Kipprahmens klein. Dank dieser Ausgestaltung wird die Traktionsrolle nach unten verschwenkt, wenn der Kipprahmen bzw. ein Hauptabschnitt des Kipprahmens nach oben verschwenkt wird. Die Traktionsrolle kann somit unter einen sich auf einem Anhänger befindenden Behälter geschoben werden, wenn der Kipprahmen in einem mittleren Grad verschwenkt ist, beispielsweise um 20° bis 70°, insbesondere 30° bis 60°. Wird nun der Kipprahmen wieder in seine Ruheposition verschwenkt, d.h. in eine im Wesentlichen horizontale Lage, wird die Traktionsrolle angehoben und gerät, wie zuvor beschrieben, in Kontakt mit den Längsstreben des Behälters. In dieser Position lässt sich ein auf dem Anhänger befindender Behälter durch Antrieb der Traktionsrolle in Richtung des Zugfahrzeugs bzw. dessen Fahrerhaus befördern.

Weitere Ausführungsformen der Erfindung ergeben sich aus den Ansprüchen sowie aus den anhand der Zeichnung näher erläuterten Ausführungsbeispielen. In der Zeichnung zeigen:
- Fig. 1: ein erfindungsgemäßes Ausführungsbeispiel einer an einem Nutz-fahrzeug angebrachten Siloaufsteller-Vorrichtung neben einem Silo-behälter
- Fig. 2a-i: das erfindungsgemäße Nutzfahrzeug gemäß Fig. 1 in verschiedenen Zuständen beim Aufladen des Silobehälters
- Fig. 3: eine einen Teil der erfindungsgemäßen Siloaufsteller-Vorrichtung gemäß Fig. 1 verkörpernden Hakeneinrichtung
- Fig. 4a-d: die Hakeneinrichtung gemäß Fig. 3 im Zusammenwirken mit einem Bolzen des Silobehälters

Gleiche Bezugsziffern in den Figuren bezeichnen jeweils gleiche Teile.

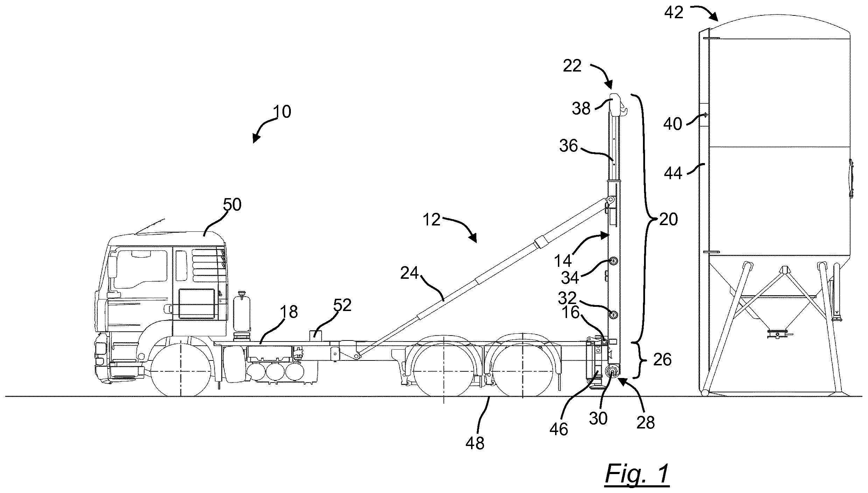

Fig. 1 zeigt ein erfindungsgemäßes Nutzfahrzeug 10 mit einer daran angebrachten erfindungsgemäßen Siloaufsteller-Vorrichtung 12 zum Aufstellen und Handhaben von Silobehältern. Die Erfindung ist jedoch nicht auf die Handhabung von Silobehältern beschränkt, sondern kann auch für die Handhabung anderer Behälter, insbesondere nach DIN 30722, Tankbehälter, insbesondere senkrecht stehende Tankbehälter, Wechselbehälter oder Abrollbehälter, zum Einsatz kommen.

Die Siloaufsteller-Vorrichtung 12 umfasst einen Kipprahmen 14, der über eine Schwenkachse 16 mit einem Fahrzeugrahmen 18 des Nutzfahrzeugs 10 schwenkbar verbunden ist. Die Schwenkachse 16 befindet sich im heckseitigen Bereich des Fahrzeugrahmens 18. Sie ist parallel zur Querachse des Fahrzeugrahmens 18 angeordnet.

Der Kipprahmen 14 weist einen Hauptabschnitt 20 auf, der sich gemäß Fig. 1 von der Schwenkachse 16 bis zum aufstellbaren Ende 22 erstreckt. In einem mittleren Bereich des Hauptabschnitts 20 ist auch an jeder Seite des Kipprahmens 14 jeweils ein Kipprahmen-Hydraulikzylinder 24 gelenkig mit dem Kipprahmen 14 verbunden. Das jeweils andere Ende dieser Kipprahmen-Hauptzylinder 24 ist gelenkig mit dem Fahrzeugrahmen 18 verbunden.

Der Kipprahmen 14 weist einen sich gemäß der Darstellung nach Fig. 1 unterhalb der Schwenkachse 16 erstreckenden hinteren Abschnitt 26 auf. Am freien Ende dieses hinteren Abschnitts 26 ist ein Hydraulikmotor 28 mit einer Traktionsrolle 30 angeordnet, welche sich in Querrichtung des Fahrzeugsrahmens erstreckt. Diese Traktionsrolle 30 verläuft parallel zur Schwenkachse 16. Die Traktionsrolle 30 weist zwei äußere Bereiche - nämlich einen zur linken und einen zur rechten Fahrzeugseite hin ausgerichteten Bereich - auf, die drehbar vom Hydraulikmotor angetrieben sind und eine raue, insbesondere gezahnte, Oberflächengestaltung aufweisen. Ferner sind an jeder Längsseite des Kipprahmens 14 ein oder mehrere Lagerrollen 32, 34 vorgesehen. Die äußeren Bereiche der Traktionsrolle 30 weisen einen Abstand auf, der im Wesentlichen dem Abstand in Fahrzeugquerrichtung der Lagerrollen 32, 34 entspricht.

Im Bereich zwischen dem Hydraulikzylinder 24 und dem Ende 22 des Kipprahmens 14 weist der Kipprahmen 14 einen Zwischenrahmen 36 auf, der in Längsrichtung des Kipprahmens 14 mittels wenigstens eines Zwischenrahmen-Hydraulikzylinders verfahrbar ist. Im Bereich des aufstellbaren Endes 22 des Kipprahmens 14, vorzugsweise am Zwischenrahmen 36, ist jeweils eine Hakeneinrichtung 38 auf der linken Seite und der rechten Seite des Kipprahmens 14 bzw. des Zwischenrahmens 36 vorgesehen.

Jede dieser weiter unten im Detail beschriebenen Hakeneinrichtungen 38 kann jeweils mit einem korrespondierenden Bolzen 40 in Eingriff gebracht werden, der an einer von zwei sich parallel zur Längsachse eines Silobehälters 42 erstreckenden Längsstreben 44 angebracht ist. Diese Längsstreben 44 erstrecken sich vorzugsweise im Wesentlichen vom Bodenbereich des Silobehälters 42 bis zu seinem oberen Endabschnitt. Diese Bolzen 40 dienen zum Anheben des Silobehälters 42. Ferner dienen diese Bolzen 40 dazu, den Silobehälter 42 sichern zu können.

Der Abstand der Längsstreben 44 entspricht im Wesentlichen dem oben genannten Abstand der äußeren Bereiche der Traktionsrolle 30 sowie im Wesentlichen dem oben genannten Querabstand der Lagerrollen 32, 34. Auf diese Weise kann ein Silobehälter, der auf einen im Wesentlichen horizontal ausgerichteten Kipprahmen 14 liegt, mittels der Traktionsrolle 30 sowie den Lagerrollen 32, 34 in Längsrichtung des Nutzfahrzeugs 10 bewegt werden.

Am heckseitigen Endbereich des Fahrzeugrahmens 18 sind rechts und links am Fahrzeugrahmen 18 hydraulisch betätigbare Stützbeine 46 vorgesehen, die zum Festlegen des Fahrzeugrahmens 18 gegenüber dem Untergrund 48 dienen, wenn ein Silobehälter 42 aufgestellt bzw. aufgenommen wird. Am frontseitigen Endbereich des Fahrzeugrahmens 18 schließt sich das Fahrerhaus 50 an.

Die Betätigung der genannten Hydraulikzylinder, insbesondere der Kipprahmen-Hydraulikzylinder 24, des oder der Zwischenrahmen-Hydraulikzylinder sowie der hydraulisch betätigbaren Stützbeine 46 erfolgt über eine im Fahrerhaus 50 und/oder am Fahrzeugrahmen 18 angeordnete, nicht dargestellte Steuerungseinrichtung, die vorzugsweise im Bereich eines Auflagebocks 52 zur Auflage des Kipprahmens 14 angeordnet ist. Mittels dieser Steuerungseinrichtung kann zudem die Hakeneinrichtung 38 betätigt werden, wie weiter unten näher ausgeführt ist.

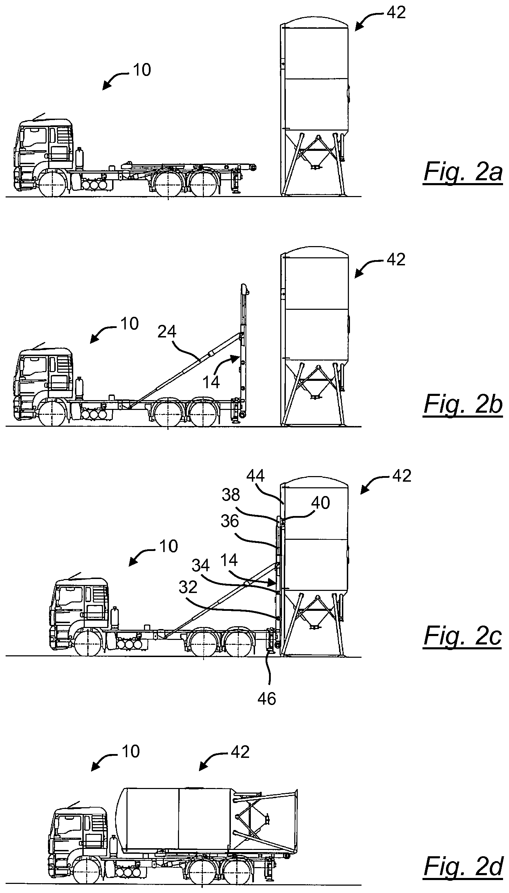

Fig. 2a bis 2d veranschaulichen den Vorgang des Aufladens eines Silobehälters 42 auf ein Nutzfahrzeug 10 gemäß Fig. 1:
Das Nutzfahrzeug 10 fährt rückwärts an den Silobehälter 42 heran, wie in Fig. 2a dargestellt. Sodann betätigt der Fahrer mithilfe der Steuerungseinrichtung die Kipprahmen-Hauptzylinder 24, welche den Kipprahmen 14 verschwenken, so dass der Kipprahmen 14 schließlich eine im Wesentlichen senkrechte Position einnimmt, wie in Fig. 2b dargestellt. Sodann fährt das Nutzfahrzeug 10 weiter rückwärts bis schließlich die Lagerrollen 32, 34 sowie die Hakeneinrichtung 38 an den Längsstreben 44 des Silobehälters 42 anliegen, wie in Fig. 2c dargestellt.

Sodann wird der Silobehälter 42 vom Kipprahmen 14 angehoben. Dies kann beispielsweise dadurch erfolgen, dass der Zwischenrahmen 36 mittels des Zwischenrahmen-Hydraulikzylinders ausgefahren wird, bis die Hakeneinrichtung 38 vollständig unter den Bolzen 40 am Silobehälter 42 eingreift. Eine andere Möglichkeit besteht darin, die Stützbeine 46 auszufahren, bis der Silobehälter 42 angehoben wird. Sofern das Nutzfahrzeug 10 mit einer Hubachse und/oder einer Niveauregulierung des Fahrzeugrahmens ausgestattet ist, kann durch ein Anheben des Fahrzeugrahmens der Silobehälter 42 ebenfalls angehoben werden. Eine weitere Möglichkeit besteht darin, den Kipprahmen 14 über die senkrechte Stellung hinaus weiter zu verschwenken, so dass der Kipprahmen 14 beispielsweise eine Schwenkbewegung von 110° gegenüber der in Fig. 2a dargestellten horizontalen Ausrichtung vollführt und erst dann mit dem Nutzfahrzeug 10 an den Silobehälter 42 heranzufahren, so dass lediglich die Hakeneinrichtungen 38 mit den Längsstreben 44 in Kontakt gelangen. Durch gleichzeitiges Zurückschwenken des Kipprahmens 14 und weiteres Rückwärtsfahren kann ebenfalls der Silobehälter 42 angehoben werden.

Sodann wird der Kipprahmen 14 zurück in seine horizontale Lage (wie in Fig. 2a) verschwenkt, bis der Silobehälter 42 waagerecht auf dem Nutzfahrzeug 10 liegt. In diesem Zustand ist der Silobehälter 42 gegen eine Verschiebung bzw. gegen ein Verrutschen in Fahrzeuglängsrichtung durch die Hakeneinrichtung 38 gesichert. Neben einem weiter unten näher erläuterten Aufnahmehaken, der ein Verrutschen des Silobehälters 42 in die rückwärtige Richtung verhindert, weist die Hakeneinrichtung 38 eine ebenfalls weiter unten erläuterte Sicherungsfalle auf, welche verhindert, dass der Silobehälter 42 beispielsweise beim Bremsen nach vorne rutschen kann. Die Hakeneinrichtung 38 dient somit auch zur Sicherung des Silobehälters 42.

Oftmals müssen mehrere Silobehälter 42 transportiert werden. Zu diesem Zweck ist es vorteilhaft, wenn ein zusätzlicher Silobehälter auf einem Anhänger transportiert werden kann.

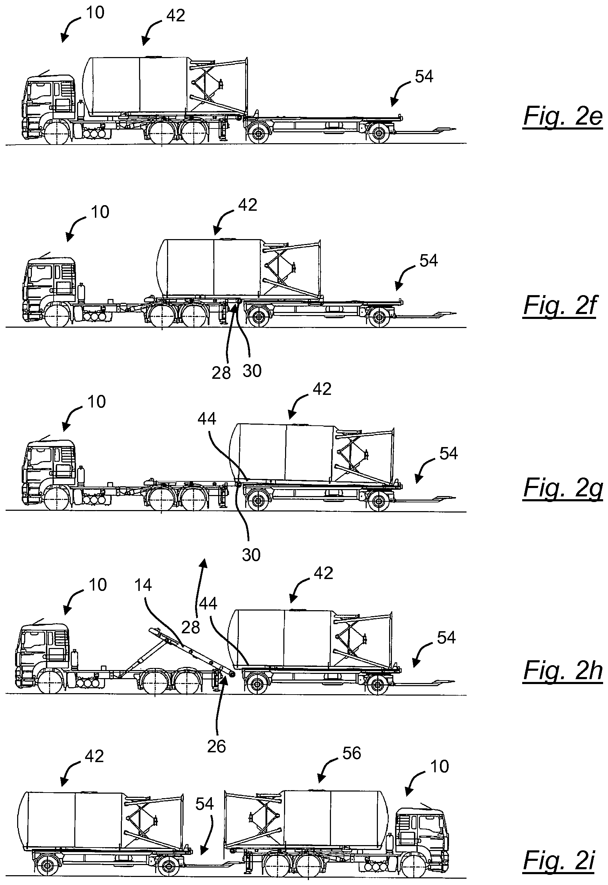

Die Fig. 2e bis 2i veranschaulichen, wie ein von dem Nutzfahrzeug 10 aufgenommener Silobehälter 42 auf einen Anhänger 54 befördert werden kann. Zu diesem Zweck fährt das Nutzfahrzeug 10 rückwärts an ein heckseitiges Ende des Anhängers 54 heran, wie in Fig. 2e dargestellt.

Sodann wird der Hydraulikmotor 28 betätigt, so dass sich die Traktionsrolle 30 in drehende Bewegung versetzt und zwar bei einer Blickrichtung, wie in Fig. 2f dargestellt, von der linken Seite des Fahrzeugs 10 aus betrachtet im Uhrzeigersinn. Diese drehende Bewegung der Traktionsrolle 30 führt dazu, dass der Silobehälter 42 vom Nutzfahrzeug 10 in Richtung des Anhängers 54 befördert wird, wie in Fig. 2f dargestellt.

Schließlich gelangt der Silobehälter 42 im Wesentlichen vollständig über den Anhänger 54, wobei jedoch noch ein Endabschnitt der Längsstreben 44 des Silobehälters 42 auf der Traktionsrolle 30 aufliegt, wie in Fig. 2g dargestellt.

Zum Lösen dieses Aufliegens der Längsstreben 44 auf die Traktionsrolle 30 wird der Kipprahmen 14 wieder in Richtung einer aufrechten Stellung verschwenkt, beispielsweise um 30°, wodurch der hintere Abschnitt 26 des Kipprahmens 14 abgesenkt wird, so dass die Traktionsrolle 30 den Kontakt zu den Längsstreben 44 verliert, wie in Fig. 2h dargestellt.

Sodann fährt das Nutzfahrzeug 10 an einen zweiten Silobehälter 56 heran, lädt diesen zweiten Silobehälter 56 auf und koppelt dann den Anhänger 54 mit aufgeladenem ersten Silobehälter 42 an, um einen Fahrzeugzug bestehend aus dem dann als Zugfahrzeug zu bezeichnenden Nutzfahrzeug 10 und dem Anhänger 54 zu bilden, wie in Fig. 2i dargestellt.

Das Abladen und Aufstellen der Silobehälter 42, 56 erfolgt in umgekehrter Reihenfolge.

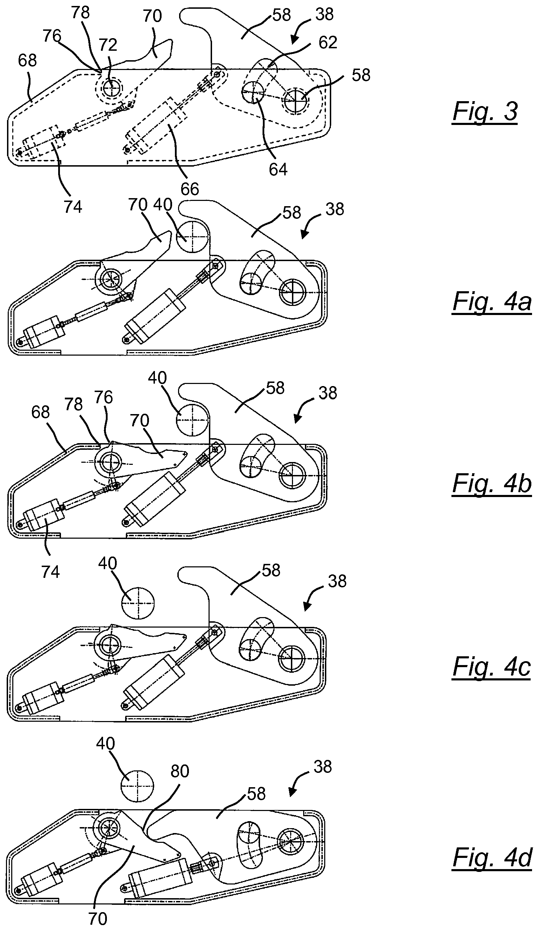

Fig. 3 zeigt die oben genannte Hakeneinrichtung 38 in einer Seitenansicht. Die Ausrichtung gemäß Fig. 3 entspricht einer Ausrichtung mit horizontal ausgerichteten Kipprahmen 14 beispielsweise gemäß Fig. 2a.

Die Hakeneinrichtung 38 weist den oben genannten Aufnahmehaken 58 auf, der um eine Achse 60 schwenkbar ist. Die Schwenkbarkeit des Aufnahmehakens 58 wird durch eine entlang eines Kreisbogens verlaufende Nut 62 begrenzt, welche mit einem Zapfen 64 in Eingriff steht. Zapfen 64 und Nut 62 erlauben eine Verschwenkung des Aufnahmehakens 58 um etwa 30°. Der Aufnahmehaken 58 wird mittels eines ersten Pneumatikzylinders 66 verstellt, der innerhalb eines Gehäuses 68 der Hakeneinrichtung 38 angeordnet ist.

Ferner weist die Hakeneinrichtung eine Sicherungsfalle 70 auf, die um eine weitere Achse 72 schwenkbar ist. Die Sicherungsfalle 70 wird mittels eines zweiten Pneumatikzylinders 74 verstellt, der innerhalb des Gehäuses 68 der Hakeneinrichtung 38 angeordnet ist. Die Verschwenkbarkeit der Sicherungsfalle 70 wird einerseits durch Anschlagfläche 76 an der Sicherungsfalle 70 sowie eine korrespondierende Anschlagfläche 78 am Gehäuse in eine Richtung begrenzt. In die andere Richtung erfolgt die Begrenzung durch den zweiten Pneumatikzylinder 74.

Die Fig. 4a bis 4d veranschaulichen den Betrieb der Hakeneinrichtung 38 gemäß Fig. 3 in Verbindung mit einem Bolzen 40 des Silobehälters 42 in verschiedenen Betriebszuständen:
Fig. 4a zeigt, wie der Bolzen 40 mit den Aufnahmehaken 58 in Eingriff steht und von der Sicherungsfalle 70 gegen ein ungewolltes Herausspringen aus dem Aufnahmehaken 58 gesichert ist. Dieser Betriebszustand des Aufnahmehakens 58, der Sicherungsfalle 70 und des Bolzen 40 liegt beim aufgeladenen Silobehälter 42 auf einem Nutzfahrzeug 10 beispielsweise gemäß Fig. 2d vor.

Die Fig. 4b bis 4d veranschaulichen, wie der Bolzen 40 von der Hakeneinrichtung 38 freigegeben wird, um ein Bewegen eines Silobehälters 42 vom Zugfahrzeug 10 auf einen Anhänger 54 zu ermöglichen, so wie dies in den Fig. 2e bis 2h dargestellt ist.

Hierzu wird zunächst, wie in Fig. 4b dargestellt, der zweite Pneumatikzylinder 74 betätigt und somit die Sicherungsfalle 70 eingefahren, so dass diese Sicherungsfalle 70 nicht mehr aus dem Gehäuse 68 hervorsteht.

Sodann erfolgt eine Relativbewegung zwischen der Hakeneinrichtung 38 und dem Bolzen 40 derart, dass der Aufnahmehaken 58 nicht mehr in Eingriff mit dem Bolzen 40 steht, wie in Fig. 4c dargestellt. Diese Relativbewegung wird entweder durch eine Verschiebung des Silobehälters 42 mittels der Traktionsrolle 30 oder durch eine Verschiebung des Zwischenrahmens 36 erreicht, an dem die Halteeinrichtung 38 angebracht ist.

Sodann wird der erste Pneumatikzylinder 66 betätigt, so dass der Aufnahmehaken 58 nicht mehr gegenüber dem Gehäuse 68 der Hakeneinrichtung 38 hervorsteht, wie in Fig. 4d dargestellt. In diesem Zustand ist der Silobehälter 42 frei gegenüber der Hakeneinrichtung 38 verfahrbar. Somit kann der Silobehälter 42 beispielsweise vom Zugfahrzeug 10 auf einen Anhänger 54 übergeschoben werden, wie beispielsweise in den Fig. 2e bis 2g dargestellt.
In dem Zustand gemäß Fig. 4d arretiert zudem der Aufnahmehaken 58 die Sicherungsfalle 70, die zu diesem Zweck eine gewölbte Ausnehmung 80 für den Aufnahmehaken 58 aufweist.
Der erste Pneumatikzylinder 66 ist derart beschaltet, dass der Aufnahmehaken 58 im entlüfteten Zustand des Pneumatikzylinders 66 insbesondere mittels Federkraft in die Stellung gedrückt wird, in der der Aufnahmehaken 58 nicht aus dem Gehäuse hervorsteht. Im belüfteten Zustand des Pneumatikzylinders 66 wird hingegen der Aufnahmehaken 58 in eine Stellung gedrückt, in der er aus dem Gehäuse hervorsteht.
Der zweite Pneumatikzylinder 74 ist derart beschaltet, dass die Sicherungsfalle 70 im entlüfteten Zustand des Pneumatikzylinders 74 insbesondere mittels Federkraft in die Stellung gedrückt wird, in der die Sicherungsfalle 70 aus dem Gehäuse hervorsteht. Im belüfteten Zustand des Pneumatikzylinders 74 wird hingegen die Sicherungsfalle 70 in eine Stellung gedrückt, in der sie nicht aus dem Gehäuse hervorsteht.

## Patentansprüche

1. Behälteraufsteller-Vorrichtung, insbesondere Siloaufsteller-Vorrichtung für ein Nutzfahrzeug (10) mit einem Kipprahmen (14) zur Aufnahme und Handhabung eines Behälters, z.B. Silobehälters (42), Wechselbehälters, Tankbehälters oder Abrollbehälters, wobei der Kipprahmen (14) mittels wenigstens eines Kipprahmen-Hydraulikzylinders (24) um eine Schwenkachse (16) schwenkbar ist,
**dadurch gekennzeichnet, dass**
am heckseitigen Endabschnitt (26) des Kipprahmens (14) eine angetriebene Traktionsrolle (30) vorgesehen ist, mittels der der Behälter (42) in Längsrichtung des Kipprahmens (14) verschiebbar ist.

2. Behälteraufsteller-Vorrichtung nach Anspruch 1,
**dadurch gekennzeichnet, dass**
die Traktionsrolle (30) mittels eines Hydraulikmotors (28) und/oder Elektromotors angetrieben ist.

3. Behälteraufsteller-Vorrichtung nach Anspruch 1 oder 2,
**gekennzeichnet durch**
eine Hakeneinrichtung (38), die am Kipprahmen (14) angeordnet ist, insbesondere an einem Zwischenrahmen (36), der in Längsrichtung des Kipprahmens (14) mittels wenigstens eines Zwischenrahmen-Hydraulikzylinders verfahrbar ist.

4. Behälteraufsteller-Vorrichtung nach Anspruch 3,
**dadurch gekennzeichnet, dass**
die Hakeneinrichtung (38) einen Aufnahmehaken (58) zum Aufnehmen des Behälters (42) aufweist, wobei der Aufnahmehaken (58) einen ausgefahrenen Zustand und einen eingefahrenen Zustand einnehmen kann, wobei insbesondere im ausgefahrenen Zustand der Aufnahmehaken (58) gegenüber dem Gehäuse (68) der Hakeneinrichtung (58) hervorsteht und im eingefahrenen Zustand der Aufnahmehaken (58) nicht aus dem Gehäuse (68) hervorsteht.

5. Behälteraufsteller-Vorrichtung nach Anspruch 4,
**dadurch gekennzeichnet, dass**
der Aufnahmehaken (58) mittels eines Stellantriebs, insbesondere Pneumatikzylinders (66) oder Elektroantriebs, verschwenkbar und/oder versenkbar ist.

6. Behälteraufsteller-Vorrichtung nach Anspruch 4 oder 5,
**dadurch gekennzeichnet, dass**
die Hakeneinrichtung (38) eine Sicherungsfalle (70) aufweist, die einen ausgefahrenen Zustand und einen eingefahrenen Zustand einnehmen kann, wobei insbesondere im ausgefahrenen Zustand die Sicherungsfalle (70) gegenüber dem Gehäuse (68) der Hakeneinrichtung (38) hervorsteht und im eingefahrenen Zustand die Sicherungsfalle (70) nicht aus dem Gehäuse (68) hervorsteht.

7. Behälteraufsteller-Vorrichtung nach Anspruch 6,
**dadurch gekennzeichnet, dass**
die Sicherungsfalle (70) mittels eines Stellantriebs, insbesondere Pneumatikzylinders (74) oder Elektroantriebs, verschwenkbar und/oder versenkbar ist.

8. Behälteraufsteller-Vorrichtung nach einem der Ansprüche 6 oder 7,
**dadurch gekennzeichnet, dass**
im eingefahrenen Zustand des Aufnahmehakens (58) der Aufnahmehaken (58) die Sicherungsfalle (70) in ihrem eingefahrenen Zustand fixiert.

9. Behälteraufsteller-Vorrichtung nach einem der vorherigen Ansprüche,
**dadurch gekennzeichnet, dass**
die Schwenkachse (16) parallel, jedoch beabstandet von der Traktionsrolle (30) angeordnet ist und zwar in Fahrtrichtung des Nutzfahrzeuges (10) betrachtet vor der Traktionsrolle (30).

10. Nutzfahrzeug mit einer Behälteraufsteller-Vorrichtung, insbesondere Siloaufsteller-Vorrichtung (12), zum Aufstellen und Handhaben von Behältern, z.B. Silobehältern (42), Wechselbehältern, Tankbehältern oder Abrollbehältern,
**dadurch gekennzeichnet, dass**
die Behälteraufsteller-Vorrichtung (12) nach einem der Ansprüche 1 bis 9 ausgebildet ist.

## Claims

1. Container positioning device, in particular a silo positioning device for a commercial vehicle (10) with a tilting frame (14) for receiving and handling a container, e.g. silo container (42), interchangeable container, tank container or roll-off container, the tilting frame (14) being pivotable about a pivot axis (16) by means of at least one tilting frame hydraulic cylinder (24), **characterized in that** a driven traction roller (30) is provided at the rear end portion (26) of the tilting frame (14), by means of which the container (42) can be displaced in the longitudinal direction of the tilting frame (14).

2. Container positioning device according to claim 1, **characterized in that** the traction roller (30) is driven by means of a hydraulic motor (28) and/or an electric motor.

3. Container positioning device according to claim 1 or 2, **characterized by** a hook device (38) which is arranged on the tilting frame (14), in particular on an intermediate frame (36) which can be moved in the longitudinal direction of the tilting frame (14) by means of at least one intermediate frame hydraulic cylinder.

4. Container positioning device according to claim 3, **characterized in that** the hook device (38) has a receiving hook (58) for receiving the container (42), wherein the receiving hook (58) can assume an extended state and a retracted state, wherein in particular in the extended state the receiving hook (58) protrudes opposite from the housing (68) of the hook device (58) and in the retracted state the receiving hook (58) does not protrude from the housing (68).

5. Container positioning device according to claim 4, **characterized in that** the receiving hook (58) can be pivoted and/or lowered by means of an actuator, in particular by means of a pneumatic cylinder (66) or an electric drive.

6. Container positioning device according to claim 4 or 5, **characterized in that** the hook device (38) has a safety latch (70) which can assume an extended state and a retracted state, wherein in particular in the extended state the safety latch (70) protrudes opposite from the housing (68) of the hook device (38) and in the retracted state the safety latch (70) does not protrude from the housing (68).

7. Container positioning device according to claim 6, **characterized in that** the safety latch (70) can be pivoted and/or lowered by means of an actuator, in particular by means of a pneumatic cylinder (74) or an electric drive.

8. Container positioning device according to one of the claims 6 or 7, **characterized in that** in the retracted state of the receiving hook (58) the receiving hook (58) fixes the safety latch (70) in its retracted state.

9. Container positioning device according to one of the previous claims, **characterized in that** the pivot axis (16) is arranged parallel but spaced apart from the traction roller (30), namely in front of the traction roller (30) when viewed in the direction of travel of the commercial vehicle (10).

10. Commercial vehicle with a container positioning device, in particular a silo positioning device (12), for positioning and handling containers, e.g. silo containers (42), interchangeable containers, tank containers or roll-off containers, **characterized in that** the container positioning device (12) is designed in accordance with one of the claims 1 to 9.

## Revendications

1. Dispositif de mise en place d'un conteneur, notamment dispositif de mise en place de silo pour un véhicule utilitaire (10) avec un cadre basculant (14) destiné à recevoir et à manipuler un conteneur, par ex. : un conteneur de silo (42), un conteneur interchangeable, un conteneur de réservoir ou un caisson mobile, le cadre basculant (14) pouvant pivoter autour d'un axe de pivotement (16) au moyen d'au moins un vérin hydraulique de cadre basculant (24),
**caractérisé en ce que**
sur la section finale arrière (26) du cadre basculant (14) est prévu un rouleau de traction entraîné (30) au moyen duquel le conteneur (42) peut être déplacé dans le sens longitudinal du cadre basculant (14).

2. Dispositif de mise en place d'un conteneur selon la revendication 1,
**caractérisé en ce que**
le rouleau de traction (30) est entraîné au moyen d'un moteur hydraulique (28) et/ou d'un moteur électrique.

3. Dispositif de mise en place d'un conteneur selon la revendication 1 ou 2,
**caractérisé par**
un dispositif à crochet (38) qui est disposé sur le cadre basculant (14), notamment sur un cadre intermédiaire (36), qui peut être déplacé dans le sens longitudinal du cadre basculant (24) au moyen d'au moins un vérin hydraulique de cadre intermédiaire.

4. Dispositif de mise en place d'un conteneur selon la revendication 3,
**caractérisé en ce que**
le dispositif à crochet (38) comporte un crochet de réception (58) destiné à recevoir le conteneur (42), le crochet de réception (58) pouvant adopter un état sorti et un état rentré, ressortant notamment à l'état sorti du crochet de réception (58) par rapport au boîtier (68) du dispositif à crochet (58) et ne ressortant pas du boîtier (68) à l'état rentré du crochet de réception (58).

5. Dispositif de mise en place d'un conteneur selon la revendication 4,
**caractérisé en ce que**
le crochet de réception (58) peut être pivoté et/ou escamoté au moyen d'un mécanisme de commande, notamment un vérin pneumatique (66) ou entraînement électrique.

6. Dispositif de mise en place d'un conteneur selon la revendication 4 ou 5,
**caractérisé en ce que**
le dispositif à crochet (38) comporte un cliquet de sécurité (70) qui peut adopter un état sorti et un état rentré, le cliquet de sécurité (70) ressortant notamment à l'état sortie du dispositif à crochet (38) par rapport au boîtier (68) et le cliquet de sécurité (70) ne ressortant pas du boîtier (68) à l'état rentré.

7. Dispositif de mise en place d'un conteneur selon la revendication 6,
**caractérisé en ce que**
le cliquet de sécurité (70) peut être pivoté et/ou escamoté au moyen d'un mécanisme de commande, notamment un vérin pneumatique (74) ou entraînement électrique.

8. Dispositif de mise en place d'un conteneur selon la revendication 6 ou 7,
**caractérisé en ce qu'**
à l'état rentré du crochet de réception (58), le crochet de réception (58) fixe le cliquet de sécurité (70) dans son état rentré.

9. Dispositif de mise en place d'un conteneur selon l'une quelconque des revendications précédentes,
**caractérisé en ce que**
l'axe de pivotement (16) est disposé parallèle, toutefois à distance du rouleau de traction (30), c'est-à-dire vu dans le sens de la marche du véhicule utilitaire (10) devant le rouleau de traction (30).

10. Véhicule utilitaire avec un dispositif de mise en place d'un conteneur, notamment dispositif de mise en place de silo (12) pour mettre en place et manipuler des conteneurs, par ex. : des conteneurs de silo (42), des conteneurs interchangeables, des conteneurs de réservoir ou des caissons amovibles,
**caractérisé en ce que**
le dispositif de mise en place de conteneur (12) est constitué selon l'une quelconque des revendications 1 à 9.
